# EUROPEAN PATENT APPLICATION

(11) **EP 1 720 301 A1**
(43) Date of publication of application: **08.11.2006**
(21) Application number: 06008979.4
(22) Date of filing: 28.04.2006
(51) Int. Cl.: H04L 12/56, H04Q 7/38

(54) **Mobile communication network, mobile terminal transmission rate scheduling method, base station and recording medium that records program for computer to execute this method**

(30) Priority: 02.05.2005 JP 2005133984
(71) Applicant: NEC Corporation, Minato-ku Tokyo (JP)
(72) Inventor: Sakuma, Emiko, Minato-ku, Tokyo (JP); Kawabata, Hisashi, Minato-ku, Tokyo (JP); Nishimura, Osami, Minato-ku, Tokyo (JP); Haseba, Yuko, Minato-ku, Tokyo (JP); Kondo, Daisuke, Minato-ku, Tokyo (JP)
(74) Representative: Glawe, Delfs, Moll

(57) **Abstract**

Disclosed is a mobile terminal transmission scheduling method for use in a base station within a mobile communication network. This method is executed in the following process. A base station acquires position information and a speed of a mobile terminal. When the base station judges that the mobile terminal is within the cell and outside the specified region and also judges that the speed is large, the base station outputs a scheduling adjustment indication signal. The base station normally transmits to a mobile terminal a scheduling control signal as it is that is generated within the basestation. Further, when the scheduling adjustment indication signal is generated, the base station transmits to the mobile terminal an additional scheduling control signal for instructing the mobile terminal to change its transmission rate.

## Description

### BACKGROUND OF THE INVENTION

### FIELD OF THE INVENTION

The present invention relates to scheduling technology for use in mobile communication systems. In particular, the present invention relates to a transmission rate scheduling method for mobile terminals, base stations performing this method and recording medium that records a program used in this base station.

### DESCRIPTION OF THE RELATED ART

In a mobile communication system, a base station (or Node-B) controls the transmission power of mobile terminals within a cell covered by the base station. The base station controls the transmission power of each mobile terminal, so that the quality of the received data from a mobile terminal located at an edge of the cell should be approximately equal to the quality of the received data from a mobile terminal located at the center of the cell. Consequently, the transmission power of a mobile terminal located near a boundary of the cell is larger than the power of a mobile terminal located at the center of the cell.

When a mobile terminal is moving at a high speed, the propagation characteristic of the transmitted wave from this mobile terminal also varies fast. The base station compensates this variation of the propagation characteristic by estimating the propagation characteristic of the transmitted wave from the terminal. However, when the moving speed of the mobile terminal becomes much larger, processing for the estimation of the propagation characteristic will be unable to track or follow the variation of the propagation characteristic, and hence the lower quality of the received data at the base station will result. To mitigate this, a mobile terminal moving at a high speed is controlled to raise its transmission power.

In recent years, an uplink (from a mobile terminal to a base station) with a higher transmission speed is desired in mobile communication networks. For example, in a Wideband Code Division Multiple Access (WCDMA) system, provision of Enhanced Uplink Dedicated Channel (EUDCH) is proposed. This EUDCH requires a higher transmission power than the existing shared channels.

When a mobile terminal recedes from a base station, the base station instructs the mobile terminal to raise the transmission power of this EUDCH, provided that there exists a radio resource margin. The base station, through this instruction, makes the mobile terminal to maintain a high transmission rate. And the base station achieves transmission rate scheduling of each mobile terminal to keep Rise over Thermal noise (RoT) over the whole cell constant, making use of a Rate Grant signal. This RoT indicates the total received interference power.

For example, JP-2004-215276A discloses a method of controlling the transmission rate of a mobile terminal based on the power margin information and the transmission power information from the mobile terminal.

As described above, a mobile terminal located at an edge of a cell is controlled to make its transmission power large. Then, the signal transmitted from this mobile terminal may possibly bring interference to adjacent cells. Furthermore, when this mobile terminal is moving at a high speed, the transmitted signal from this mobile terminal gives larger interference to the adjacent cells.

When the interference to an adjacent cell increases, the base station of this adjacent cell instructs the mobile terminals belonging to this base station to lower the transmission power in order to keep the RoT value constant. Thus, the mobile terminals within this adjacent cell are forced to lower their transmission rate. Namely, to maintain the quality of the received data at the base station with a low transmission power (from each mobile terminal), the base station of this adjacent cell instructs the mobile terminals belonging to this base station to reduce the transmission rate.

In this way, a mobile terminal moving around an edge of the cell at a high speed lowers the throughput in the adjacent cells.

### SUMMARY OF THE INVENTION

The first exemplary feature of the invention provides a base station using transmission scheduling technology for mobile terminals that reduces interference to adjacent cells.

According to the first exemplary aspect of the invention, there is provided a base station which includes:
a first detecting part that detects position information indicating a position of a mobile terminal based on a received signal from the mobile terminal;
a first comparing part that compares the detected position information with a first pre-defined threshold;
a second detecting part that detects a moving speed of the mobile terminal based on the received signal from the mobile terminal;
a second comparing part that compares the detected moving speed with a second pre-defined threshold;
a scheduling control part that generates a scheduling control signal for controlling scheduling of the mobile terminal;
a scheduling adjustment indication signal generating part that outputs a scheduling adjustment indication signal when said mobile terminal is within the cell and outside said specified region, and the moving speed is large; and
a scheduling control signal outputting part that, in addition to receiving the scheduling control signal and transmitting the scheduling control signal to the mobile terminal, transmits to the mobile terminal an additional scheduling control signal for instructing said mobile terminal to change the transmission rate of said mobile terminal when said scheduling adjustment indication signal has been supplied.

The first exemplary aspect of the invention judges, by acquiring position information of the mobile terminal, whether the mobile terminal is located near a boundary to adjacent cells or not. This aspect also judges whether the mobile terminal is moving at a high speed or not, by detecting the speed of the mobile terminal. When the mobile terminal is located near a cell boundary and is also moving at a high speed, the base station generates a scheduling adjustment indication signal. When this scheduling adjustment indication signal is generated, the base station transmits to the mobile terminal an additional scheduling control signal for changing the transmission rate of the mobile terminal. The mobile terminal changes its transmission rate upon receiving this additional scheduling control signal, as in the case of receiving the normal scheduling control signal.

Since the first exemplary aspect is arranged in this way, this aspect reduces the interference to the adjacent cells.

Other features and aspects of the invention will be clarified by the description of the preferred embodiments.

### BRIEF DESCRIPTION OF THE DRAWINGS

The above and further objects, novel features and advantages of the present invention will be more fully understood from the following detailed description when read together with the accompanying drawings in which:
FIG. 1 is a diagram showing a mobile communication network that relates to the present invention;
FIG. 2 is a block diagram showing an example of the structure of the base station in FIG. 1;
FIG. 3 is a block diagram showing an example of the structure of the scheduling signal outputting part 16 in FIG. 2; and
FIG. 4 is a flow chart for explaining operation of the base station.

### DETAILED DESCRIPTION OF THE PREFERRED EMBODIMENTS

Hereafter, preferred exemplary embodiments of the present invention will be described with reference to the drawings.

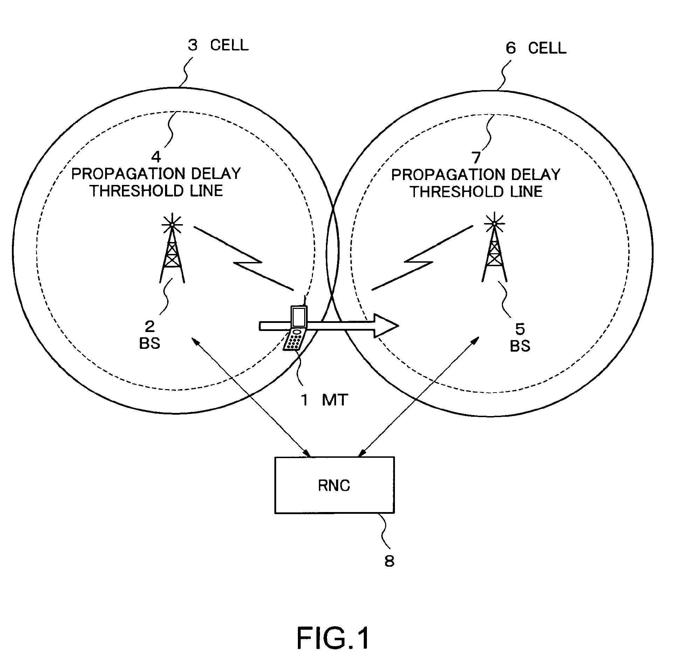

FIG. 1 is a diagram showing a mobile communication system to which the present invention applies.

As shown in FIG. 1, this mobile communication system contains a mobile terminal (MT) 1, base stations (BSs) 2 and 5, and a radio network controller (RNC) 8. The radio network controller 8 controls the base stations 2 and 5. The base station 2 covers the area of a cell 3, while the base station 5 covers the area of a cell 6. The cells 3 and 6 are partly overlapped. In FIG. 1, the mobile terminal (MT) 1 is assumed to be moving from the cell 3 toward the cell 6.

In FIG. 1, a propagation delay threshold line 4 is a closed line virtually set up in the cell 3. When the mobile terminal 1 is located on this closed line, the propagation delay between the mobile terminal 1 and the base station 2 equals to the propagation delay threshold. When the mobile terminal 1 is located outside this closed line, possibility for the transmitted signals from this mobile terminal to interfere adjacent cells becomes higher, depending on its speed. A propagation delay threshold line 7 is similar to the propagation delay threshold line 4.

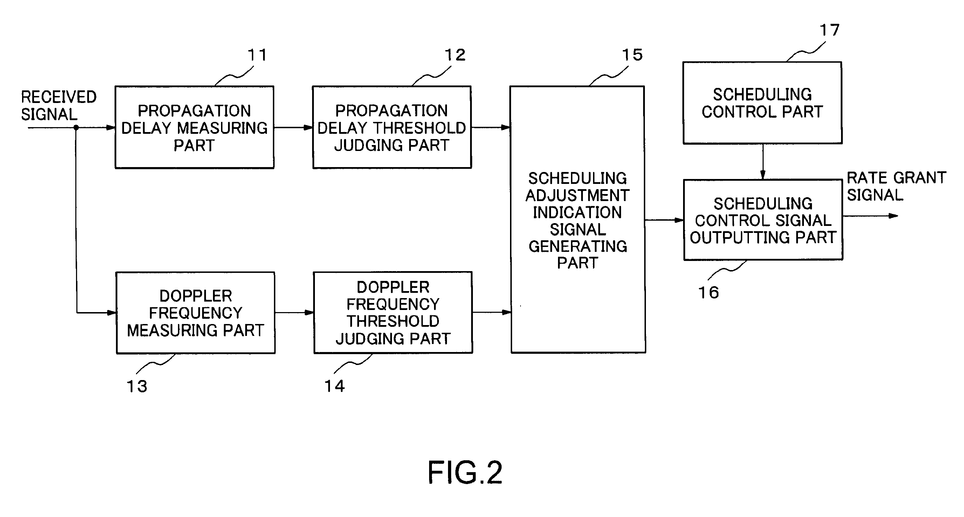

FIG. 2 is a block diagram showing an example of the structure of the base station 2. The structure of the base station 5 in FIG. 1 is identical to that of the base station 2. FIG. 2 shows only those parts directly related to the present invention within the internal structure of the base station 2.

The base station of FIG.2 contains a propagation delay measuring part 11, a propagation delay threshold judging part 12, a Doppler frequency measuring part 13, a Doppler frequency threshold judging part 14, a scheduling adjustment indication signal generating part 15, a scheduling control signal outputting part 16 and a scheduling control part 17.

The present exemplary embodiment detects position information of a mobile terminal by measuring the propagation delay from the mobile terminal to the base station. The present embodiment also detects a moving speed of the mobile terminal by measuring the Doppler frequency of the received signal.

The propagation delay measuring part 11 measures the propagation delay using the received signal from the mobile terminal. The propagation delay measuring part 11 obtains this propagation delay, for example, by measuring the phase difference between the frame timing of the received signal and the own frame timing of the base station. Here, in some cases, the base station 2 receives the same transmitted signal from the mobile terminal through a plural number of transmission paths. In this case, the propagation delay measuring part 11 detects a plural number of propagation delays. When a plural number of propagation delays have been detected, the propagation delay measuring part 11 takes the minimum value as the measured propagatiom delay value.

The propagation delay threshold judging part 12 judges whether the propagation delay measured by the propagation delay measuring part 11 exceeds or not a pre-defined propagation delay threshold (TH1) .

The Doppler frequency measuring part 13 measures the Doppler frequency using the received signal from the mobile terminal. The Doppler frequency threshold judging part 14 judges whether the Doppler frequency measured by the Doppler frequency measuring part 13 exceeds or not a pre-defined Doppler frequency threshold (TH2).

The scheduling adjustment indication signal generating part 15 generates a scheduling adjustment indication signal, based on the results of the judgment by the propagation delay threshold judging part 12 and the Doppler frequency threshold judging part 14. Thus, the scheduling adjustment indication signal generating part 15 outputs the scheduling adjustment indication signal, if the measured propagation delay exceeds the threshold (TH1) and the measured Doppler frequency exceeds the threshold (TH2).

The scheduling control part 17 performs scheduling of the mobile terminals and outputs a scheduling control signal, for instance, a Rate Grant signal. Here, the Rate Grant signal is a transmission rate control signal used in the EUDCH. The base station controls the transmission rate of the mobile terminal using this control signal in the EUDCH. Since the details of the scheduling control part 17 are well known to the skilled persons in the art, detailed explanation is omitted.

The scheduling control signal outputting part 16, when supplied with the scheduling control signal by the scheduling control part 17, transmits this scheduling control signal as it is to the mobile terminal. The scheduling control signal outputting part 16, when receiving the scheduling adjustment indication signal, also transmits an additional scheduling control signal to the mobile terminal to lower its transmission rate.

The present exemplaey embodiment can be modified so that the propagation delay threshold judging part 12 stops the operation of the Doppler frequency judging part 13, if the measured propagation delay does not exceed the propagation delay threshold (TH1). In this modification, when the mobile terminal is located within the region enclosed by the propagation delay threshold line 4, the Doppler frequency measuring part 13 stops its operation. Thus, this modification reduces power consumption of the base station.

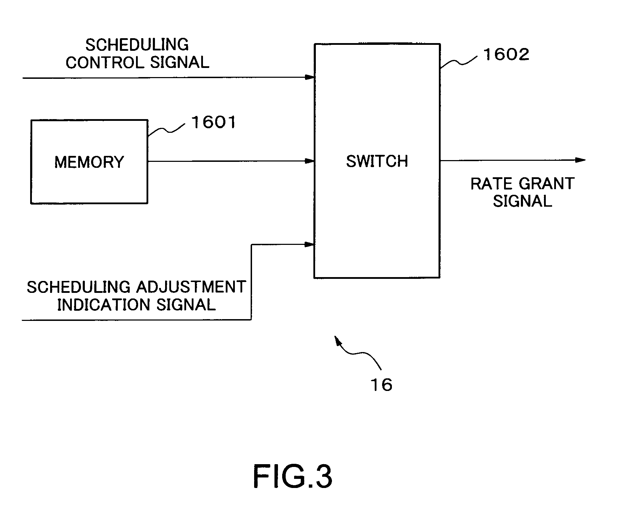

FIG. 3 is a block diagram showing an example of the structure of the scheduling control signal outputting part 16. As shown in FIG. 3, the scheduling control signal outputting part 16 consists of a memory 1601 and a switch 1602.

The memory 1601 pre-stores the additional scheduling control signal to be used for the mobile terminal to lower its transmission rate.

The switch 1602, when receiving the scheduling control signal from the scheduling control part 17, outputs this scheduling control signal as it is. And the switch 1602, when receiving the scheduling adjustment indication signal from the scheduling adjustment indication signal generating part 15, reads out and outputs the additional scheduling control signal from the memory 1601. Both the scheduling control signal and the additional scheduling control signal being output from the scheduling control signal outputting part 16 are transmitted to the mobile terminal.

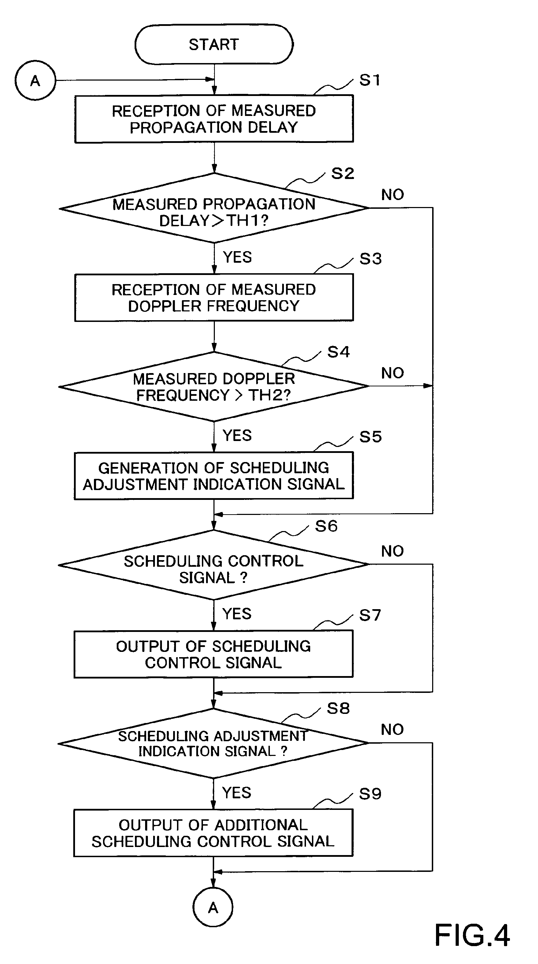

FIG. 4 is a flow chart for explaining operation of the base station. In FIG. 2, the propagation delay threshold judging part 12, the Doppler frequency threshold judging part 14, the scheduling adjustment indication signal generating part 15 and the scheduling control signal outputting part 16 may be realized with a computer. This flow chart also corresponds to a flow chart of a program to be executed by this computer. Hereafter, this computer is denoted by "CPU."

Here, it is assumed that the propagation delay threshold and the Doppler frequency threshold are pre-set in the propagation delay threshold judging part 12 and the Doppler frequency threshold judging part 14, respectively.

It is also assumed that the mobile terminal 1 is currently located within the cell 3 and is moving from the cell 3 toward the cell 6. When the mobile terminal 1 stays in the cell 3, it is controlled by the base station 2.

In STEP S1 in FIG. 4, when the base station 2 receives a signal transmitted from the mobile terminal 1, the CPU receives a measured propagation delay from the propagation delay measuring part 11 (FIG. 2).

In STEP S2, the propagation delay threshold judging part 12 judges whether the measured propagation delay exceeds or not the propagation delay threshold (TH1).

In STEP S2, when the propagation threshold judging part 12 judges that the measured propagation delay does not exceed the propagation delay threshold, the processing of the CPU proceeds to STEP S6. On the contrary, when the propagation threshold judging part 12 judges that this measured propagation delay does exceed the propagation delay threshold, the mobile terminal 1 is determined to be located outside of the propagation delay threshold line 4 in the cell 3. And the processing of the CPU proceeds to STEP S3.

As the mobile terminal 1 recedes from the base station 2, the propagation delay becomes larger. And at the time when the measured propagation delay exceeds the propagation delay threshold (TH1), the mobile terminal 1 is considered to cross the propagation delay threshold line 4 shown in FIG. 1. At this point of time, the base station may recognize a possibility that the transmitted signals of the mobile terminal 1 would interfere the adjacent cells.

In STEP S3, the CPU receives a measured Doppler frequency from the Doppler frequency measuring part 13.

In STEP S4, the Doppler frequency threshold judging part 14 judges whether the measured Doppler frequency exceeds or not the Doppler frequency threshold.

In STEP S4, when the Doppler frequency threshold judging part 14 judges that the measured Doppler frequency does not exceed the Doppler frequency threshold, the processing of the CPU proceeds to STEP S6. In STEP S4, when the Doppler frequency threshold judging part 14 judges that the measured Doppler frequency does exceed the Doppler frequency threshold, the processing of the CPU proceeds to STEP S5.

The fact that the measured Doppler frequency exceeds the Doppler frequency threshold implies that the moving speed of the mobile terminal 1 is large. Therefore, the fact that the processing of the CPU reaches STEP S5 means a higher possibility that the transmitted signals of the mobile terminal 1 may interfere the adjacent cells. This is because the processing of the CPU reaches STEP S5 only if the measured propagation delay is large and the measured Doppler frequency is also large.

In this STEP S5, when the measured propagation delay is large and the measured Doppler frequency is also large, the scheduling adjustment indication signal generating part 15 outputs a scheduling adjustment indication signal.

The scheduling control part 17 performs scheduling on the transmission rate of the mobile terminal 1. The scheduling control part 17 outputs a scheduling control signal to the scheduling control signal outputting part 16.

In STEP S6, the scheduling control signal outputting part 16 judges whether a scheduling control signal is supplied or not from the scheduling control part 17. If the result of this judgment is "Yes," the scheduling control signal outputting part 16 outputs this scheduling control signal as it is in STEP S7. If the result of this judgment is "No," the processing of the CPU at the scheduling control signal outputting part 16 proceeds to STEP S8.

In STEP S8, the scheduling control signal outputting part 16 judges whether a scheduling adjustment indication signal has been output or not in STEP S5 . If the result of this judgment is "No," the processing of the CPU returns to STEP S1. If this result of the judgment is "Yes," the scheduling control signal outputting part 16 outputs the above stated additional scheduling control signal in STEP S9.

These scheduling control signal and additional scheduling control signal are transmitted to the mobile terminal 1.

FIG. 4 shows an example where the CPU executes the processing for threshold judgment of the measured Doppler frequency (STEPs S3 & S4) after the completion of the processing for threshold judgment of the measured propagation delay (STEPs S1 & S2). However, it would be clear to those skilled persons in the art that the processing of the CPU can be executed, for example, in the order of "S3, S4, S1 and S2" or in the order of "S1, S3, S4 and S2".

In the related art, when the moving speed of the mobile terminal 1 is large, the base station has no other option than controlling the mobile terminal 1 to increase its transmission power in order to avoid a situation where the processing for the channel estimation cannot track this moving speed. In this case, the mobile terminal 1 causes interference to the cell 6 if the mobile terminal 1 is located near the cell 6 adjacent to the cell 3.

The present exemplary embodiment lowers the transmission rate of a mobile terminal when the measured propagation delay exceeds the propagation delay threshold and the measured Doppler frequency exceeds the Doppler frequency threshold. Namely, in such a case, the present exemplary embodiment reduces the interference to the adjacent cells by lowering Energy per bit to Noise power density ratio (Eb/No) of the mobile terminal. Needless to say, it is the minimum condition that this lowered Eb/No must satisfy the required quality.

### OTHER EXEMPLARY EMBODIMENTS

Next, other embodiments of the present invention will be exemplified.

In the above stated embodiment, either the propagation delay threshold or the Doppler frequency threshold is a fixed value that the system operator defines taking into consideration the radius of the cells 3 and 6, etc. Alternatively, the radio network controller 8 may notify the base stations 2 and 5 of these threshold values. According to this embodiment, the radio network controller can instruct those base stations managing the cells adjacent to a particular cell having large interference to change the propagation delay threshold and the Doppler frequency threshold, thus reducing the interference caused by this particular cell.

Moreover, a plural pairs of the propagation delay threshold and the Doppler frequency threshold may be defined. This embodiment can control the amount' of adjustment (of the additional scheduling control signal) in a multi-step manner. Namely, in the present embodiment, as the measured value exceeds a larger threshold, the transmission (data) rate of the mobile terminal can be reduced by a larger amount.

Furthermore, the above stated embodiment refers to such control that precedes the shift to a soft hand-over (SHO) status of the mobile terminal 1. After the shift to the SHO status, in order to prevent overload in the cell 6, the base station 5 transmits the Rate Grant signal to the mobile terminal 1 to lower its transmission rate. For the base stations to perform control during the shift to the SHO, the radio network controller 8 notifies the base stations 2 and 5 that the mobile terminal 1 is currently in the SHO status. In the case that the base stations 2 and 5 that have received such notification are performing control shown in FIG. 4, those base stations do not process, for instance, S1 through S5, S8 and S9 but perform the normal EUDCH scheduling in the SHO status.

In the above exemplified embodiment, in order to lower the transmission rate of the mobile terminal 1, the processing using the Rate Grant signal has been explained as an example. However, in the present invention, other control signals, if any, can be used, instead of the Rate Grant signal, to change the transmission rate.

The above exemplified embodiments acquire the position information of the mobile terminal by measuring the propagation delay from the mobile terminal to the base station. Also above exemplified embodiments acquire the moving speed of the mobile terminal by measuring the Doppler frequency of the received signal. However, in the present invention, method of measuring the position and the moving speed of the mobile terminal is not restricted to the method stated above. Or, criterion for judging whether the mobile terminal exists near the cell boundary or not is not restricted to the above stated criterion for the judgment. In addition, criterion for judging whether the mobile terminal is moving at a high speed or not is not restricted to the above stated criterion for the judgment.

For example, consider a case where the mobile terminal 1 is equipped with a Global Positioning System (GPS). In this case, the base station can detect the position information and the moving speed of the mobile terminal by acquiring the position information from (the GPS of) the mobile terminal. Thus, given this position information of the mobile terminal, the base station can judge whether the mobile terminal exists near the cell boundary or not. The base station can also detect the moving speed of this mobile terminal knowing the variation in time of the position information of this mobile terminal.

Consider also a case where the mobile terminal is provided with a function of reporting its transmission power to the base station. In this case, the base station can measure the position information of the mobile terminal by calculating the propagation loss (i.e. the difference between the transmission power reported to the base station by the mobile terminal and the received signal power (at the base station)). And the base station can also detect the moving speed of the mobile terminal given the variation in time of this propagation loss.

Moreover, in a case where the mobile terminal is provided with a function of reporting its moving speed to the base station, the base station, receiving this report, can judge whether the mobile terminal is moving at a high speed or not.

In this way, the base station can adopt various methods, including combinations of the above stated methods, for measuring the position and the moving speed of the mobile terminal.

While this invention has been described in connection with certain exemplary embodiments, it is to be understood that the subject matter encompassed by way of this invention is not be limited to those specific embodiments. On the contrary, it is intended for the subject matter of the invention to include all alternatives, modifications and equivalents as can be included with the sprit and scope of the following claims. Further, the inventor' s intent is to retain all equivalents even if the claims are amended during prosecution.

## Claims

1. A mobile terminal transmission scheduling method used in a base station within a mobile communication network including mobile terminals and base stations connectable to these mobile terminals, said method comprising the steps of:
(A) receiving position information indicating a position of said mobile terminal and a moving speed of said mobile terminal;
(B) judging, based on said position information, whether said mobile terminal exists or not within a specified region of a cell managed by said base station and judging whether said moving speed is large or not;
(C) outputting a scheduling adjustment indication signal, when said step (B) judges that said mobile terminal is within said cell and outside said specified region and when said step (B) judges that said moving speed is large; and
(D) receiving a scheduling control signal for controlling said scheduling of said mobile terminal, transmitting said control signal to said mobile terminal, and in addition transmitting an additional scheduling control signal for instructing said mobile terminal to change its transmission rate when said step (C) outputs said scheduling adjustment indication signal.

2. The method of claim 1, wherein
said position information is expressed by a propagation delay between said mobile terminal and said base station, said moving speed is expressed by a Doppler frequency of a received signal from said mobile terminal, and said step (B) compares said propagation delay with a pre-defined first threshold and compares said Doppler frequency with a pre-defined second threshold.

3. The method of claim 1, wherein
said additional scheduling control signal is a control signal for reducing the transmission rate of said mobile terminal.

4. The method of claim 3, wherein
said base station receives data from said mobile terminal through Enhanced Uplink Dedicated Channel (EUDCH).

5. The method of claim 4, wherein
said scheduling control signal is a Rate Grant signal.

6. A base station connectable to a mobile terminal, said base station comprising:
a first detecting part that detects position information indicating a position of said mobile terminal based on a received signal from said mobile terminal;
a first comparing part that compares said detected position information with a first pre-defined threshold;
a second detecting part that detects a moving speed of said mobile terminal based on a received signal from said mobile terminal;
a second comparing part that compares said detected moving speed with a second pre-defined threshold;
a scheduling control part that generates a scheduling control signal for controlling scheduling of said mobile terminal;
a scheduling adjustment indication signal generating part that outputs a scheduling adjustment indication signal when said mobile terminal is within said cell and outside said specified region, and said moving speed is large; and
a scheduling control signal outputting part that, in addition to receiving said scheduling control signal and transmitting said scheduling control signal to said mobile terminal, transmits to said mobile terminal an additional scheduling control signal for instructing said mobile terminal to change the transmission rate of said mobile terminal when said scheduling adjustment indication signal has been supplied.

7. The base station of claim 6, wherein
said first detecting part is a propagation delay measuring part that measures a propagation delay between said mobile terminal and said base station, and
said second detecting part is a Doppler frequency measuring part that measures a Doppler frequency of a received signal from said mobile terminal.

8. The base station of claim 6, wherein
said additional scheduling control signal is a control signal for reducing the transmission rate of said mobile terminal.

9. The base station of claim 6, wherein
said base station receives data from said mobile terminal through Enhanced Uplink Dedicated Channel (EUDCH).

10. The base station of claim 9, wherein
said scheduling control signal is a Rate Grant signal.

11. The base station of claim 7, wherein
said first comparing part stops operation of said Doppler frequency measuring part when said measured propagation delay does not exceed said first threshold.

12. A mobile communication network system containing base stations that can be connected to mobile terminals and a radio network controller that controls these base stations,
each of said base stations comprising:
a first detecting part that detects position information indicating a position of said mobile terminal based on a received signal from said mobile terminal;
a first comparing part that compares said detected position information with a first pre-defined threshold;
a second detecting part that detects a moving speed of said mobile terminal based on a received signal from said mobile terminal;
a second comparing part that compares said detected moving speed with a second pre-defined threshold;
a scheduling control part that generates a scheduling control signal for controlling scheduling of said mobile terminal;
a scheduling adjustment indication signal generating part that outputs a scheduling adjustment indication signal when said mobile terminal is within said cell and outside said specified region, and said moving speed is large; and
a scheduling control signal outputting part that, in addition to receiving said scheduling control signal and transmitting said scheduling control signal to said mobile terminal, transmits to said mobile terminal an additional scheduling control signal for instructing said mobile terminal to change the transmission rate of said mobile terminal when said scheduling adjustment indication signal has been supplied.

13. The system of claim 12, wherein
said first detecting part is a propagation delay measuring part that measures a propagation delay between said mobile terminal and said base station, and
said second detecting part is a Doppler frequency measuring part that measures a Doppler frequency of a signal received from said mobile terminal.

14. The system of claim 12, wherein
said additional scheduling control signal is a control signal for reducing the transmission rate of said mobile terminal.

15. The system of claim 12, wherein
said mobile terminal transmits data to said base station through Enhanced Uplink Dedicated Channel (EUDCH).

16. The system of claim 15, wherein
said scheduling control signal is a Rate Grant signal.

17. The system of claim 13, wherein
said first comparing part stops operation of said Doppler frequency measuring part when said measured propagation delay does not exceed said first threshold.

18. The system of claim 12, wherein
said first threshold and said second threshold are set by said radio network controller.

19. A recoding medium that records a program for a computer to execute a mobile terminal transmission scheduling method for use in a base station within a mobile communication network including mobile terminals and base stations that can be connected to these mobile terminals, said program comprising the steps of:
(A) receiving position information indicating a position of said mobile terminal and a moving speed of said mobile terminal;
(B) judging, based on said position information, whether said mobile terminal exists or not within a specified region of a cell managed by said base station and judging whether said moving speed is large or not;
(C) outputting a scheduling adjustment indication signal, when said step (B) judges that said mobile terminal is within said cell and outside said specified region and when said step (B) judges that said moving speed is large; and
(D) receiving a scheduling control signal for controlling said scheduling of said mobile terminal, transmitting said control signal to said mobile terminal, and in addition transmitting an additional scheduling control signal for instructing said mobile terminal to change its transmission rate when said step (C) outputs said scheduling adjustment indication signal.

20. The recording medium of claim 19, wherein
said position information is expressed by a propagation delay between said mobile terminal and said base station, said moving speed is expressed by a Doppler frequency of a received signal from said mobile terminal, and said step (B) compares said propagation delay with a pre-defined first threshold and compares said Doppler frequency with a pre-defined second threshold.

21. The recording medium of claim 19, wherein
said additional scheduling control signal is a control signal for reducing the transmission rate of said mobile terminal.

22. The recording medium of claim 19, wherein
said base station receives data from said mobile terminal through Enhanced Uplink Dedicated Channel (EUDCH).

23. The recording medium of claim 22, wherein
said scheduling control signal is a Rate Grant signal.
